(19) Europäisches Patentamt
European Patent Office
Office européen des brevets

(11) **EP 2 383 819 A1**

(12) **EUROPEAN PATENT APPLICATION**
published in accordance with Art. 153(4) EPC

(43) Date of publication:
**02.11.2011 Bulletin 2011/44**

(51) Int Cl.:
*H01M 4/02* (2006.01)    *H01M 4/04* (2006.01)
*H01M 4/66* (2006.01)

(21) Application number: **09839103.0**

(22) Date of filing: **11.06.2009**

(86) International application number:
**PCT/JP2009/002643**

(87) International publication number:
**WO 2010/086911 (05.08.2010 Gazette 2010/31)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **29.01.2009 JP 2009017592**

(71) Applicant: **Panasonic Corporation**
**Kadoma-shi**
**Osaka 571-8501 (JP)**

(72) Inventors:
• **MURAOKA, Yoshiyuki**
**1-61 Shiromi 2-chome,**
**Chuo-ku,**
**Osaka-shi,**
**Osaka (JP)**

• **SATO, Toshitada**
**1-61 Shiromi 2-chome,**
**Chuo-ku,**
**Osaka-shi,**
**Osaka (JP)**

(74) Representative: **Grünecker, Kinkeldey,**
**Stockmair & Schwanhäusser**
**Leopoldstrasse 4**
**80802 München (DE)**

(54) **NONAQUEOUS ELECTROLYTE SECONDARY BATTERY AND MANUFACTURING METHOD THEREFOR**

(57) An electrode group 1 which is formed by winding a positive electrode and a negative electrode into a flat shape with a separator interposed therebetween is contained in a rectangular battery case 4. The positive electrode has a tensile strength of 15 N/cm or lower when the positive electrode has a tensile extension of 1%, and the positive electrode has a tensile extension of 3% or higher when the positive electrode breaks. A gap S between a longitudinal end of the electrode group 1 and an inner surface of a short side of the rectangular battery case 4 meets the expression: $S \geq 1/8 (L \times \alpha)$ where L is a longitudinal length of the electrode group, and $\alpha$ is a tensile extension of the positive electrode when the positive electrode breaks.

FIG. 1

**Description**

TECHNICAL FIELD

The present invention relates to a nonaqueous electrolyte secondary battery, and a method for fabricating the same.

BACKGROUND ART

After repeated charges and discharges, a nonaqueous electrolyte secondary battery may experience buckling in an electrode group including positive and negative electrodes wound with a separator interposed therebetween. Specifically, a negative electrode active material expands when the battery is charged, thereby applying stretching stress to a negative electrode. When a positive electrode cannot follow the stretch of the negative electrode due to expansion of the negative electrode active material, only the negative electrode stretches, and phase shift occurs between the positive and negative electrodes. As a result, the electrode group becomes uneven, and the buckling occurs in the electrode group. In particular, when a high capacity material such as silicon etc. is used as the negative electrode active material, the negative electrode active material greatly expands and contracts due to charges and discharges. This easily brings about the buckling in the electrode group.

When the electrode group buckles, a distance between the positive and negative electrodes is varied. In a portion of the electrode group where a distance between the positive and negative electrodes is increased, overvoltage in charging the battery is increased, thereby making the charge difficult. In a portion of the electrode group where the distance between the positive and negative electrodes is reduced, the overvoltage is reduced, thereby making the charge easy. That is, a portion which is difficult to be charged, and a portion which is easily charged (i.e., uneven charge/discharge occurs) are generated in the electrode group. As a result, battery capacity is reduced as charge/discharge cycles are repeated.

When the uneven charge/discharge occurs, an amount of charged electricity is increased in a portion of the electrode group (i.e., the portion which is easily charged), and metal lithium is locally deposited on a surface of the negative electrode corresponding to the portion. When battery temperature increases in this case, the deposited metal lithium may react with a nonaqueous electrolyte. This may reduce thermal stability of the battery after charge/discharge cycles.

As a solution to this problem, Patent Document 1 describes a technology of providing a thin active material film made of separated columns on a current collector having a roughed surface by forming a thin film of silicon etc. by sputtering. This provides gaps in the thin active material film, thereby absorbing stress caused by expansion and contraction of the thin active material film.

Patent Document 2 shows a technology of using a material having a predetermined tensile strength and elastic coefficient as a negative electrode current collector. This can alleviate deformation of the current collector even when the stress caused by expansion and contraction of the active material is applied thereto.

CITATION LIST

PATENT DOCUMENT

Patent Document 1: Japanese Patent Publication No. 2002-313319
Patent Document 2: Japanese Patent Publication No. 2003-007305
Patent Document 3: Japanese Patent Publication No. H05-182692
Patent Document 4: Japanese Patent Publication No. H07-105970

SUMMARY OF THE INVENTION

TECHNICAL PROBLEM

In a battery including an electrode group which is wound into a flat shape, and is contained in a rectangular battery case, the buckling may inevitably occur in a flat portion of the electrode group extending in a longitudinal direction, even when the negative electrode active material or the negative electrode current collector is provided with a function of reducing the stress. Since curved portions of the electrode group at both longitudinal ends of the electrode group are restricted by the battery case, the stress cannot be reduced in the total length of the electrode group in the winding direction. As a result, the buckling occurs in a flat portion between the curved portions.

In view of the foregoing, the present invention has been achieved. An object of the invention is to provide a nonaqueous electrolyte secondary battery which includes an electrode group wound into a flat shape, alleviates the occurrence of buckling in the electrode group due to expansion and contraction of a negative electrode active material, and allows good charge/discharge cycles, and a method for fabricating the nonaqueous electrolyte secondary battery.

SOLUTION TO THE PROBLEM

According to the present invention, a positive electrode which has a tensile strength of 15 N/cm or lower when the positive electrode has a tensile extension of 1%, and has a tensile extension of 3% or higher when the positive electrode breaks is used as the positive electrode constituting the flat electrode group. The flat electrode group is contained in a rectangular battery case in such a manner that a gap S between a longitudinal end of the electrode group and an inner surface of a short side of the rectangular battery case meets the equation: $S \geq 1/8 \ (L \times \alpha)$ where L is a longitudinal length of the electrode group, and $\alpha$ is a tensile extension of the positive electrode when the positive electrode breaks.

With this configuration, the occurrence of buckling in the electrode group can be alleviated, and deformation of the battery case due to expansion of the electrode can be alleviated even when charge/discharge cycles are repeated.

In a preferred embodiment, the positive electrode having the above-described features can be obtained by rolling a positive electrode current collector on a surface of which a positive electrode active material layer is formed, and then thermally treating the rolled positive electrode current collector.

ADVANTAGES OF THE INVENTION

According to the present invention, in the nonaqueous electrolyte secondary battery including the electrode group wound into a flat shape, the occurrence of the buckling in the electrode group can be alleviated, and the deformation of the battery case due to expansion of the electrode can be alleviated even when the charge/discharge cycles are repeated. This allows provision of a nonaqueous electrolyte secondary battery having a good charge/discharge cycle characteristic.

BRIEF DESCRIPTION OF THE DRAWINGS

[FIG. 1] FIG. 1 is a perspective view, partially cut away, schematically illustrating the structure of a nonaqueous electrolyte secondary battery according to a first embodiment of the invention.
[FIG. 2] FIG. 2 is a cross-sectional view illustrating an electrode group contained in a rectangular battery case.

DESCRIPTION OF EMBODIMENTS

The inventors of the present invention have studied a relationship between the positive electrode and the buckling in the electrode group due to expansion and contraction of the negative electrode active material, although conventional measures against the buckling have been taken particularly based on a relationship between the negative electrode and the buckling. As a result, the inventors have found that the buckling in the electrode group can be alleviated by setting a tensile strength of the positive electrode to 15 N/cm or lower when the positive electrode has the tensile extension of 1%. Based on the finding, the applicant of the present application has disclosed a method for alleviating the occurrence of the buckling in the electrode group by setting the tensile strength of the positive electrode to 15 N/cm or lower when the positive electrode has the tensile extension of 1% in the specification of Japanese Patent Application No. 2008-095232.

Table 1 shows a relationship described in the above-described specification between the tensile strength of the positive electrode when the positive electrode has the tensile extension of 1% (hereinafter simply referred to as "tensile strength") and expansion of a rectangular battery case in a radial direction after the charge/discharge cycles. The tensile strength of the positive electrode can be controlled by, for example, adjusting a thickness of a positive electrode current collector, or performing predetermined thermal treatment on the positive electrode (in Table 1, the tensile strength of the positive electrode was controlled by changing temperature and time for the thermal treatment performed after the positive electrode is rolled.)

[Table 1]

| | Thermal treatment of positive electrode after rolling | | Tensile strength of positive electrode [N/cm] | Charge/discharge cycle test |
|---|---|---|---|---|
| | Thermal treatment temperature [ C] | Thermal treatment time [sec] | | Expansion of battery case [mm] |
| Battery 1 | 280 | 60 | 7 | 0.1 |
| Battery 2 | | 40 | 10 | 0.2 |
| Battery 3 | | 20 | 15 | 0.3 |
| Battery 4 | 230 | 60 | 17 | 0.8 |
| Battery 5 | - | - | 20 | 1.2 |

As shown in Table 1, Batteries 4 and 5 in which the positive electrode had high tensile strength experienced great expansion of the battery case in a short side direction after the charge/discharge cycles, while Batteries 1-3 in which the positive electrode had low tensile strength experienced small expansion of the battery case. Specifically, the buckling in the electrode group occurred in Batteries 4 and 5 in which the positive electrode had high tensile strength, and the battery case was greatly expanded. In contrast, the buckling in the electrode group was alleviated in Batteries 1-3 in which the positive electrode had low tensile strength, and the battery case was hardly deformed. When the tensile strength is low, the positive electrode can easily be deformed in accordance with the stretch of the negative electrode due to expansion of the negative electrode active material in charging the battery. Therefore, the occurrence of the buckling in the electrode group is presumably alleviated even when the charges and discharges are repeated.

The term "tensile strength" indicates a tensile strength at which a test sample having a width of 15 mm, and a length of an effective part of 20 mm is stretched at a speed of 1 mm/min, and the tensile extension of the test sample reaches 1%. The "tensile extension" can be obtained from the expression: $\{(\beta - \alpha)/\alpha\} \times 100$ where $\alpha$ is a length of the test sample before the stretching, and $\beta$ is a length of the test sample after the stretching.

The inventors of the present invention have conducted a charge/discharge cycle test using rectangular secondary batteries each comprising a flat electrode group including a positive electrode controlled to have the predetermined tensile strength. In this test, a battery was found in which the occurrence of the buckling in the electrode group was alleviated, but heat was generated due to an internal short circuit. Since the tensile extension of the positive electrode when the positive electrode breaks is smaller than the tensile extension of the negative electrode when the negative electrode breaks, the positive electrode was presumably not able to follow the stretch of the negative electrode, and broke.

The inventors of the present invention have produced the following finding as to the tensile extension of the positive electrode when the positive electrode breaks (hereinafter simply referred to as "tensile extension"). Specifically, in general, a positive electrode material mixture layer is applied to a positive electrode current collector, and then thermal treatment is performed to improve adhesion between the positive electrode material mixture layer and the positive electrode current collector (see, for example, Patent Documents 3 and 4). The thermal treatment temporarily increases the tensile extension of the positive electrode. However, the tensile extension decreases when the positive electrode is subsequently rolled, and therefore, the ultimate tensile extension of the positive electrode cannot be increased. By contrast, the inventors of the present invention have found that the tensile extension of the positive electrode is increased by rolling the positive electrode current collector on which the positive electrode material mixture layer is applied, and then thermally treating the rolled positive electrode current collector at a predetermined temperature.

The term "tensile extension of the positive electrode when the positive electrode breaks" indicates a tensile extension when an electrode having a width of 15 mm, and a length of an effective part of 20 mm is stretched at a speed of 20 mm/min, and breaks.

Based on the finding, the applicant of the present application has disclosed a method for controlling the tensile extension of the positive electrode to 3% or higher by thermally treating the positive electrode after the rolling in the specification of Japanese Patent Application No. 2007-323217 (PCT/JP2008/002114).

Table 2 shows a relationship described in the above-described specification between conditions of the thermal treatment performed on the rolled positive electrode and the tensile extension of the rolled positive electrode.

[Table 2]

| | Thermal treatment performed on rolled positive electrode | | Tensile extension of rolled positive electrode 1%] |
|---|---|---|---|
| | Thermal treatment temperature [ C] | Thermal treatment time [sec] | |
| Battery 6 | 280 | 10 | 3.0 |
| Battery 7 | | 20 | 5.0 |
| Battery 8 | | 120 | 6.0 |
| Battery 9 | | 180 | 6.5 |
| Battery 10 | - | - | 1.5 |

As shown in Table 2, in Batteries 6-9 in which the predetermined thermal treatment was performed on the rolled positive electrode, the tensile extension of the positive electrode was increased to 3.0% or higher as compared with Battery 10 in which the positive electrode was not thermally treated.

The increase of the tensile extension of the positive electrode to 3.0% or higher by the thermal treatment performed after the rolling is presumably based on the following mechanism.

Specifically, the tensile extension of the positive electrode is not limited only by the tensile extension of the positive electrode current collector because the positive electrode material mixture layer is formed on each surface of the positive electrode current collector. In general, the positive electrode material mixture layer is harder than the positive electrode current collector. Therefore, when the positive electrode which has not been thermally treated after the rolling is stretched, a large crack is generated in the positive electrode material mixture layer, and simultaneously, the positive electrode breaks. A presumable cause of this phenomenon is that tensile stress in the positive electrode material mixture layer increases as the positive electrode stretches, and tensile stress applied to the positive electrode current collector is concentrated on part of the positive electrode current collector near the large crack, thereby breaking the positive electrode current collector.

When the positive electrode which has been thermally treated after the rolling is stretched, the positive electrode keeps stretching while generating multiple small cracks in the positive electrode material mixture layer, and then the positive electrode breaks after a while. A presumable cause of this phenomenon is that the tensile stress applied to the positive electrode current collector is dispersed due to the generation of the small cracks. Therefore, the positive electrode keeps stretching to a certain length without simultaneously breaking with the generation of the cracks. When the tensile stress reaches a predetermined level, the positive electrode current collector breaks.

As described above, even when the negative electrode active material expands or contracts in the charge/ discharge cycles, the occurrence of the buckling in the electrode group can be alleviated without breaking the positive electrode by setting the tensile strength of the positive electrode to 15 N/cm or lower when the tensile extension of the positive electrode is 1%, and setting the tensile extension of the positive electrode when the positive electrode breaks to 3% or higher.

Use of the positive electrode controlled to have the predetermined tensile strength and tensile extension to constitute a flat electrode group allows the positive and negative electrodes to stretch together, thereby alleviating the occurrence of the buckling in the electrode group. However, stretch of the electrode group in a short side direction is limited by inner surfaces of long sides of the battery case. Therefore, the electrode group in which the stress is alleviated stretches in the longitudinal direction. Therefore, when a sufficient gap is not provided between the longitudinal ends of the electrode group and the inner surfaces of the short sides of the battery case, the expanded electrode group meets the inner surface of the battery case, and pressure may be applied to the battery case from the inside. In this case, the battery case may expand in the short side direction in which the strength of the battery case is low.

Table 3 shows a relationship between the gap between the electrode group and the battery case and an amount of expansion of the battery case with the predetermined tensile strength and tensile extension.

[Table 3]

| | Tensile strength [N/cm] | Tensile extension 1%] | Gap in the case [mm] | Amount of expansion [mm] | Value A |
|---|---|---|---|---|---|
| Battery 11 | 15 | 6.0 | 0.50 | 0.1 | 4 |
| Battery 12 | 15 | 6.0 | 0.34 | 0.1 | 6 |
| Battery 13 | 15 | 6.0 | 0.25 | 0.1 | 8 |

(continued)

|  | Tensile strength [N/cm] | Tensile extension 1%] | Gap in the case [mm] | Amount of expansion [mm] | Value A |
|---|---|---|---|---|---|
| Battery 14 | 15 | 6.0 | 0.20 | 0.3 | 10 |
| Battery 15 | 20 | 1.5 | 0.50 | 0.7 | 1 |
| Battery 16 | 20 | 1.5 | 0.50 | 0.7 | 1 |

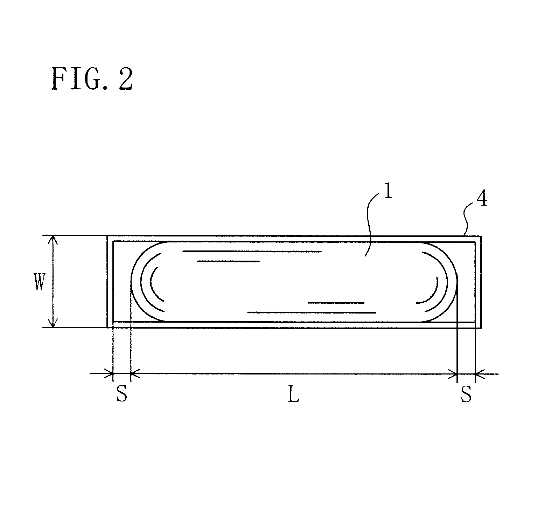

In Table 3, the term "gap in the case" indicates the size of a gap S between a longitudinal end of the electrode group 1 and an inner surface of a short side of the rectangular battery case 4 as shown in FIG. 2. The term "amount of expansion" indicates, as shown in FIG. 2, increase in thickness W of the battery case 4 in the short side direction after the charge/discharge cycles. In the charge/discharge cycle, the battery was charged at a constant current of 1000 mA to a battery voltage of 4.2 V at 45 C, and was charged at a constant voltage of 4.2 V to a current of 50 mA. After that, the charged battery was discharged at a constant current of 1000 mA until the battery voltage was reduced to 2.5 V. This charge/discharge cycle was performed 500 times.

In Table 3, the terms "tensile strength" and "tensile extension" in Table 3 refer to the tensile strength of the positive electrode when the tensile extension of the positive electrode is 1%, and the tensile extension of the positive electrode when the positive electrode breaks, respectively.

As shown in Table 3, among Batteries 11-14 in which the tensile strength and the tensile extension of the positive electrode were controlled to 15 N/cm, and 6%, respectively, Batteries 11-13 in which the gap in the case was set to 0.50-0.25 mm had the amount of expansion as small as 0.1 mm, while Battery 14 in which the gap in the case was set to 0.20 mm had the amount of expansion as large as 0.3 mm. In contrast, Batteries 15 and 16 in which the tensile strength and the tensile extension of the positive electrode were controlled to 20 N/cm, and 1.5%, respectively, the amount of expansion was as large as 0.7 mm even with the gap in the case set to 0.50 mm.

The positive electrode in each Batteries 11-16 included $LiNi_{0.82}Co_{0.15}Al_{0.03}O_2$ as the positive electrode active material, and iron-containing aluminum foil as the positive electrode current collector (in Battery 15, aluminum foil without containing iron was used). The rolled positive electrode was thermally treated using a hot roller at 190 C for 4 seconds to control the tensile strength and the tensile extension to the predetermined values, respectively (in Battery 16, the thermal treatment was not performed). The negative electrode used included artificial graphite as the negative electrode active material, and copper foil as the negative electrode current collector.

In view of the above-described results, the following relationship has found between the gap in the case and the amount of expansion. Specifically, with the tensile strength and the tensile extension of the positive electrode controlled to 15 N/cm or lower, and 3% or higher, respectively, the occurrence of the buckling in the electrode group can be alleviated even after the charge/discharge cycles, without break of the positive electrode. As a result, the electrode group stretches in the longitudinal direction. In this case, when the gap in the case is set to 0.25 mm or larger, (in Batteries 11-13), the electrode group does not meet the battery case even when the electrode group stretches in the longitudinal direction, and the battery case does not expand. However, when the gap in the case is set to 0.20 mm or smaller (Battery 14), the electrode group stretched in the longitudinal direction meet the battery case, and the battery case expands.

In Batteries 15 and 16 in which the tensile strength of the positive electrode was controlled to a value higher than 15 N/cm (20 N/cm), the electrode group buckled, and the battery case greatly expanded.

The phenomenon that the electrode group stretches in the longitudinal direction presumably depends on the tensile extension of the positive electrode. As an index of the expansion of the battery case due to the stretch of the electrode group, value A obtained from the following equation is determined.

$$\text{Value A} = \alpha \times L/S$$

In this equation, as shown in FIG. 2, L is a longitudinal length of the electrode group 1, S is a gap between the longitudinal end of the electrode group 1 and the inner surface of a short side of the rectangular battery case 4, and $\alpha$ is the tensile extension of the positive electrode when the positive electrode breaks. The fabricated electrode group had a length of 34 mm, and an inner longitudinal dimension of the rectangular battery case of 35mm. The inner surface of the short side of the rectangular battery case is an inner surface of the battery case facing the longitudinal direction of the electrode group contained in the battery case.

Table 3 shows the values A obtained from Batteries 11-16. As shown in Table 3, the expansion of the battery case due to the stretch of the electrode group can be reduced by setting the value A set to 8 or lower.

In view of the foregoing, the nonaqueous electrolyte secondary battery including the electrode group would into a flat shape has to meet all the following conditions (i) - (iii) to alleviate the occurrence of the buckling in the electrode group, and to alleviate the deformation of the battery case due to the stretch of the electrode group, without break of the electrode even after the charge/discharge cycles are repeated.

(i) The tensile strength of the positive electrode is 15 N/cm or lower when the positive electrode has the tensile extension of 1%
(ii) The tensile extension of the positive electrode when the positive electrode breaks is 3% or higher
(iii)

$$S \geq 1/8 (L \times \alpha)$$

When a material whose volume greatly varies due to charge/discharge is used as the negative electrode active material (e.g., silicon, a silicon-containing material, etc.), the volumetric expansion of the negative electrode active material is about twice as large as that of graphite. Therefore, in this case, the battery preferably meets the condition (iii) $S \geq 1/4(L \times \alpha)$.

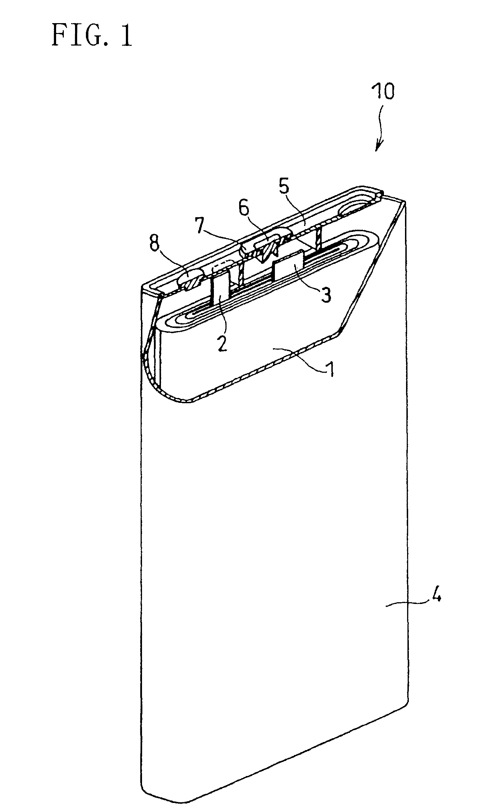

FIG. 1 is a perspective view, partially cut away, schematically illustrating the structure of a nonaqueous electrolyte secondary battery 10 according to a first embodiment of the present invention.

As shown in FIG. 1, an electrode group 1 including a positive electrode and a negative electrode wound into a flat shape with a separator interposed therebetween is contained in a rectangular battery case 4. The positive electrode (not shown) includes a positive electrode current collector on which a positive electrode active material layer is formed. The negative electrode (not shown) includes a negative electrode current collector on which a negative electrode active material layer is formed. The positive electrode is formed to meet the conditions (i) and (ii), and the electrode group 1 is contained in the rectangular battery case 4 to meet the condition (iii).

An end of a negative electrode lead 3 is connected to the negative electrode. The other end of the negative electrode lead 3 is connected to a rivet 6 at the center of a sealing plate 5 with an upper insulator (not shown) interposed therebetween. The rivet 6 is insulated from the sealing plate 5 by an insulating gasket 7. An end of a positive electrode lead 2 is connected to the positive electrode. The other end of the positive electrode lead 2 is connected to a rear surface of the sealing plate 5 with the upper insulator interposed therebetween. A lower end of the electrode group 1 and the battery case 4 are insulated from each other by a lower insulator (not shown). The upper insulator insulates the negative electrode lead 3 from the battery case 4, and insulates the electrode group 1 from the sealing plate 5. A circumference of the sealing plate 5 is fitted with an opening end of the battery case 4, and they are sealed by laser welding. An injection hole formed in the sealing plate 5 to inject a nonaqueous electrolyte is closed by a plug 8 which is laser-welded.

A method for fabricating the nonaqueous electrolyte secondary battery of this embodiment will be described.

To each surface of a positive electrode current collector made of aluminum foil of 15 $\mu$ m in thickness, for example, positive electrode material mixture slurry containing a positive electrode active material is applied, and is dried. The positive electrode material mixture slurry may contain a binder, a conductive agent, etc., in addition to the positive electrode active material. Then, the obtained product is rolled to a thickness of about 150 $\mu$m, and is thermally treated with a hot roller at 190°C for 4 seconds. Thus, a positive electrode is formed.

To a negative electrode current collector made of 8 $\mu$m thick copper foil, for example, negative electrode material mixture slurry containing a negative electrode active material is applied, and is dried. The negative electrode material mixture slurry may contain a binder, a conductive agent, etc., in addition to the negative electrode active material. Then, the obtained product is rolled to a thickness of about 150 $\mu$m, and is thermally treated with hot air at 190 C for 10 hours. Thus, a negative electrode is formed.

Then, the positive and negative electrodes are wound into an oval shape with a separator interposed therebetween to form an electrode group. Then, the electrode group is pressed from the long sides thereof to form a flat electrode group.

The flat electrode group is contained in a rectangular battery case, and the battery case is sealed with a sealing plate. Then, a nonaqueous electrolyte is injected into the case from an injection hole formed in the sealing plate. The injection hole is then sealed by a laser. Thus, the nonaqueous electrolyte secondary battery is formed.

In this embodiment, the materials and method for fabricating the components of the nonaqueous electrolyte secondary battery are not particularly limited. For example, the following materials and method can be used.

A metal sheet primarily containing aluminum may be used as the positive electrode current collector. In particular, the metal sheet preferably contains aluminum as a main ingredient, and contains iron atoms. The content of iron atoms is preferably 1.2-1.7 weight percents (wt. %) relative to the positive electrode current collector. In the nonaqueous electrolyte secondary battery, aluminum foil which is generally used as the positive electrode current collector (e.g.,

1085 aluminum, 1N30 aluminum, 3003 aluminum, etc.) contains less than 1.2 wt. % of the iron atoms relative to the positive electrode current collector. Accordingly, when the positive electrode current collector is thermally treated at a low temperature, or in a reduced time, the tensile extension of the positive electrode cannot be easily controlled.

By contrast, in a positive electrode including the positive electrode current collector made of aluminum containing 1.2-1.7 wt. % of iron atoms, the tensile extension of the positive electrode can be controlled only by short-time thermal treatment at a low temperature. This can alleviate melting of a binder etc. contained in the positive electrode active material layer, such as PVDF, thereby alleviating capacity reduction caused by the molten binder which coats the surface of the active material as much as possible.

The positive electrode active material may be lithium-containing composite oxide, e.g., lithium cobaltate, lithium nickelate, lithium manganate, etc. The positive electrode active material preferably has an average particle diameter of 5 $\mu$m to 20 $\mu$m, both inclusive.

A binder for the positive electrode is preferably polyvinylidene fluoride (PVDF). Polyvinylidene fluoride is chemically stable even in nonaqueous electrolyte secondary batteries represented by lithium ion batteries, and is inexpensive. In particular, polyvinylidene fluoride has good binding property between an active material layer and a current collector, and within the active material layer. Therefore, use of polyvinylidene fluoride as the binder provides good cycle characteristic, discharge characteristic, etc.

Examples of a conductive agent for the positive electrode include, for example, graphites such as natural graphite, artificial graphite, etc., carbon blacks, conductive fibers such as carbon fiber, metal fiber, etc.

Examples of the negative electrode current collector include, for example, stainless steel, nickel, copper, etc.

Examples of the negative electrode active material include, for example, carbon materials such as natural graphite, metal, metal fiber, oxide, nitride, tin-containing materials, silicon-containing materials, etc. The present invention is particularly effective when a material which has high capacity density, and shows great variation in volume due to charge/discharge is used as the negative electrode active material. Examples of such material include tin-containing materials, and silicon-containing materials.

The separator may be made of, for example, polyolefin such as polyethylene, polypropylene, etc.

The nonaqueous electrolyte may be a liquid material, a gelled material, or a solid material (a solid polymeric electrolyte). The liquid nonaqueous electrolyte (a nonaqueous electrolytic solution) is obtained by dissolving an electrolyte (e.g., lithium salt) in a nonaqueous solvent. The gelled nonaqueous electrolyte contains a nonaqueous electrolyte, and a polymer material which supports the nonaqueous electrolyte.

When the tensile strength of the positive electrode is adjusted by thermally treating the positive electrode, the positive electrode current collector is preferably made of a material primarily containing aluminum containing 1.2-1.7 wt. % or iron atoms. When the positive electrode active material layer contains PVDF, a rubber-based binder, etc., as the binder, the binder may coat the surface of the active material in the thermal treatment, thereby reducing battery capacity. The battery capacity tends to be reduced as a temperature for the thermal treatment is higher, and time for the thermal treatment is longer.

Specifically, when the time for thermally treating the positive electrode is too long, the binder etc. contained in the positive electrode is molten, and the molten binder etc. coats the surface of the active material. This may reduce the capacity of the positive electrode. On the other hand, when the time for the thermal treatment is too short, the tensile strength of the positive electrode cannot sufficiently be controlled, and the advantages of the present invention cannot sufficiently be obtained.

That is, the thermal treatment of the positive electrode performed under the above-described conditions allows control of the tensile strength and the tensile extension of the positive electrode without capacity reduction.

The tensile strength and the tensile extension of the positive electrode depend on physical properties of the positive electrode current collector. The tensile strength and the tensile extension of the positive electrode can be controlled, for example, by adjusting the thickness, composition, etc. of the positive electrode current collector. The tensile strength may be controlled by thermally treating the positive electrode. Alternatively, the tensile strength and the tensile extension of the electrode may be controlled by thermally treating the positive electrode, and adjusting the thickness of the positive electrode current collector.

When the tensile strength of the positive electrode is controlled by adjusting the thickness of the positive electrode current collector, or thermally treating the positive electrode, the thickness of the positive electrode current collector is preferably 1-500 $\mu$m. Adjusting the thickness of the positive electrode current collector to 5-30 $\mu$m allows maintaining the strength of the positive electrode, and reduction in weight of the positive electrode.

The thermal treatment of the positive electrode can be performed using hot air, an IH heater, far-infrared radiation, a hot roller, etc. The thermal treatment of the positive electrode may also be performed by energizing the current collector.

The present invention has been described by way of the above-described preferred embodiment. The present invention is not limited by the description of the embodiment, and can be modified in various ways. For example, in a flat electrode group formed by winding the electrodes, a surface of the electrode group perpendicular to the winding axis (a lateral cross section) may be elliptic, or substantially elliptic.

INDUSTRIAL APPLICABILITY

The nonaqueous electrolyte secondary battery of the present invention can suitably be used as a power source for household electric appliances, electric vehicles, large electric tools, etc.

DESCRIPTION OF REFERENCE CHARACTERS

1    Electrode group

2    Positive electrode lead

3    Negative electrode lead

4    Rectangular battery case

5    Sealing plate

6    Rivet

7    Insulating gasket

8    Plug

10    Battery

**Claims**

**1.** A nonaqueous electrolyte secondary battery comprising:

an electrode group which includes a positive electrode and a negative electrode wound into a flat shape with a separator interposed therebetween, and is contained in a rectangular battery case, wherein
the positive electrode includes a positive electrode current collector on which a positive electrode active material layer is formed,
the negative electrode includes a negative electrode current collector on which a negative electrode active material layer is formed,
the positive electrode has a tensile strength of 15 N/cm or lower when the positive electrode has a tensile extension of 1%, and the positive electrode has a tensile extension of 3% or higher when the positive electrode breaks, and
a gap S between a longitudinal end of the electrode group and an inner surface of a short side of the rectangular battery case meets the expression:

$$S \geq 1/8(L \times \alpha)$$

where L is a longitudinal length of the electrode group, and $\alpha$ is a tensile extension of the positive electrode when the positive electrode breaks.

**2.** The nonaqueous electrolyte secondary battery of claim 1, wherein
the gap S between the longitudinal end of the electrode group and the inner surface of the short side of the rectangular battery case meets the expression:

$$S \geq 1/4\,(L \times \alpha)$$

where L is the longitudinal length of the electrode group, and α is the tensile extension of the positive electrode when the positive electrode breaks.

3. The nonaqueous electrolyte secondary battery of claim 2, wherein
the negative electrode active material layer contains a negative electrode active material, and the negative electrode active material is made of silicon, or a silicon-containing material.

4. The nonaqueous electrolyte secondary battery of claim 1, wherein
the positive electrode current collector is made of a material containing, as a main ingredient, aluminum containing 1.2-1.7 weight percent of iron atoms.

5. The nonaqueous electrolyte secondary battery of claim 1, wherein
the positive electrode is formed by rolling the positive electrode current collector on which the positive electrode active material layer is formed, and then thermally treating the positive electrode current collector at a predetermined temperature.

6. A method for fabricating a nonaqueous electrolyte secondary battery comprising:

(a) preparing a positive electrode including a positive electrode current collector on which a positive electrode active material layer is formed;
(b) preparing a negative electrode including a negative electrode current collector on which a negative electrode active material layer is formed;
(c) rolling the positive electrode, and then thermally treating the positive electrode at a predetermined temperature;
(d) forming an electrode group by winding the positive electrode and the negative electrode into a flat shape with a separator interposed therebetween after the rolling (c) ; and
(e) placing the electrode group in a rectangular battery case, wherein
in the rolling of the positive electrode (c), the positive electrode has a tensile strength of 15 N/cm or lower when the positive electrode has a tensile extension of 1%, and the positive electrode has a tensile extension of 3% or higher when the positive electrode breaks, and
in the placing of the electrode in the rectangular battery case (e), a gap S between a longitudinal end of the electrode group and an inner surface of a short side of the rectangular battery case meets the equation:

$$S \geq 1/8\,(L \times \alpha)$$

where L is a longitudinal length of the electrode group, and α is a tensile extension of the positive electrode when the positive electrode breaks.

FIG. 1

FIG. 2

| **INTERNATIONAL SEARCH REPORT** | International application No. |
|---|---|
| | PCT/JP2009/002643 |

**A. CLASSIFICATION OF SUBJECT MATTER**
H01M10/40(2006.01)i, H01M4/02(2006.01)i, H01M4/04(2006.01)i, H01M4/66(2006.01)i

According to International Patent Classification (IPC) or to both national classification and IPC

**B. FIELDS SEARCHED**

Minimum documentation searched (classification system followed by classification symbols)
H01M10/40, H01M4/02, H01M4/04, H01M4/66

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-213339 A (Fuji Photo Film Co., Ltd.), 15 August, 1997 (15.08.97), Full text (Family: none) | 1-6 |
| A | JP 2006-190690 A (Hitachi Maxell, Ltd.), 20 July, 2006 (20.07.06), Full text (Family: none) | 1-6 |
| A | JP 2006-134762 A (Sony Corp.), 25 May, 2006 (25.05.06), Full text (Family: none) | 1-6 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 September, 2009 (07.09.09) | 29 September, 2009 (29.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/002643 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-186704 A  (Matsushita Electric Industrial Co., Ltd.), 14 August, 2008 (14.08.08), Full text (Family: none) | 1-6 |
| A | JP 2007-273259 A  (Sanyo Electric Co., Ltd.), 18 October, 2007 (18.10.07), Full text (Family: none) | 1-6 |
| A | JP 7-6752 A  (Toray Industries, Inc.), 10 January, 1995 (10.01.95), Full text (Family: none) | 1-6 |
| A | JP 2004-47332 A  (Toyota Motor Corp.), 12 February, 2004 (12.02.04), Full text (Family: none) | 1-6 |
| A | JP 2007-42580 A  (Matsushita Electric Industrial Co., Ltd.), 15 February, 2007 (15.02.07), Full text & US 2006/0222940 A1    & EP 1780824 A1 & WO 2006/106605 A1 | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002313319 A
- JP 2003007305 A
- JP H05182692 B
- JP H07105970 B
- JP 2008095232 A
- JP 2007323217 A
- JP 2008002114 W